# EUROPÄISCHE PATENTSCHRIFT

(11) **EP 4 109 273 B1**
(45) Veröffentlichungstag und Bekanntmachung des Hinweises auf die Patenterteilung: **31.12.2025**
(21) Anmeldenummer: 22179507.3
(22) Anmeldetag: 17.06.2022
(51) Int. Cl.: G09B 9/02

(54) **SCHNITTSTELLE UND VERFAHREN FÜR EINE KOMMUNIKATION ZWISCHEN EINER SIMULATIONSANWENDUNG UND EINEM PERIPHEREN SIMULATOR**
INTERFACE AND METHOD FOR COMMUNICATION BETWEEN A SIMULATION APPLICATION AND A PERIPHERAL SIMULATOR
INTERFACE ET PROCÉDÉ POUR UNE COMMUNICATION ENTRE UNE APPLICATION DE SIMULATION ET UN SIMULATEUR PÉRIPHÉRIQUE

(30) Priorität: 24.06.2021 DE 102021003250
(43) Veröffentlichungstag der Anmeldung: 28.12.2022
(73) Patentinhaber: Thales Management & Services Deutschland GmbH, Stuttgart (DE)
(72) Erfinder: Haugk, Christian, 26340 Zetel (DE); Wirth, Claudio, 26386 Wilhelmshaven (DE); Schlegel, Claudia, 26419 Schortens (DE)
(74) Vertreter: DREISS Patentanwälte PartG mbB

(56) Entgegenhaltungen:
- EP-A2- 1 359 558
- US-A- 4 207 687
- US-A- 4 484 266
- US-A1- 2011 202 553

## Beschreibung

### Stand der Technik

Die Erfindung betrifft eine Kommunikation zwischen einer Simulationsanwendung und einem peripheren Simulator.

US 2011/202553 A1 offenbart ein Verfahren zur Handhabung von räumlich referenzierten multisensorischen Daten. Das Verfahren umfasst das Identifizieren einer Voxel-Datenbank. Mittels der Voxel sind Datenelemente gespeichert. Ein Teil der Datenelemente umfasst ein Vielzahl von unterschiedlichen sensorischen Attributen. Diese unterschiedlichen sensorischen Attribute umfassen visuelle Attribute und mindestens ein Attribut, das aus einer Gruppe von Attributen ausgewählt wird, die aus einem Spektralsignaturattribut, einem Geruchsattribut, einem Hörattribut, einem Geschmacksattribut, einem somatischen Attribut und einem Materialzusammensetzungsattribut bestehen.

US 4 484 266 A offenbart einen "ESI peripheral simulator", der signalübertragend zwischen einem Simulationscomputer und einem taktischen Computer angeordnet ist, wobei die Abkürzung "ESI" für "Externally Specified Index" steht.

EP 1 359 558 A2 offenbart einen Flugsimulator. Dabei soll die in einer Simulatorplattform eingesetzte Blackbox simuliert werden, indem eine Software und softwareausführende Komponenten der simulierten Blackbox von den Schnittstellen-Hardwarekomponenten getrennt werden, die die Signalschnittstelle zwischen der simulierten Blackbox und der Simulatorplattform bilden.

US 4 207 687 A offenbart ebenfalls einen Flugsimulator.

Einsatzausbildungssysteme sind Ausbildungsmittel, mit denen Nutzer von Echtsystemen, z.B. Schiffen, die Beherrschung komplexer Technologien erlernen und trainieren können. Der Erprobungs- und Übungsbedarf steigt aufgrund zunehmender technologischer Komplexität. Aufgrund einer zunehmenden Vernetzung sollen möglichst viele Teilnehmer an einer Übung teilnehmen können. Wünschenswert ist es, Einsatzausbildungssysteme bereitzustellen, die unabhängig von der Verfügbarkeit von Systemen einsetzbar sind. Dazu kann für eine Trainingsumgebung ein Simulationsverbund eingerichtet werden, der Simulatoren von Echtsystemen und Echtsysteme umfasst.

Die Kommunikation im Simulationsverbund erfolgt in einem Kommunikationsnetzwerk und erfordert Übergänge zu nationalen und internationalen Partnern. Dazu werden eine Simulationsanwendung und Kommunikationsprotokolle eingesetzt, die besonderen Anforderungen hinsichtlich der Sicherheit in der Anwendung und der Kommunikationstechnik erfüllen müssen.

Die einzelnen Teile des Simulationsverbunds müssen für die Simulationsanwendung und die Kommunikation freigegeben sein. Der Zertifizierungsaufwand dafür ist sehr groß.

### Offenbarung der Erfindung

Durch die Schnittstelle, das System und das Verfahren nach den unabhängigen Ansprüchen sind Simulatoren von Systemen einfach austauschbar. Dadurch wird ermöglicht, verschiedenste Trainings durchzuführen.

Die Schnittstelle kann über Kommunikationsprotokolle, die für einen Simulationsverbund freigegeben sind, mit peripheren Simulatoren kommunizieren. Die Kommunikationsprotokolle dienen beispielsweise dem Transport oder der Adressierung von Signalen. Im Beispiel können paketvermittelte Signale insbesondere mit dem Transmission Control Protocol, TCP, und dem Internet Protokoll, IP, gesendet werden. Es kann die Verwendung eines Verschlüsselungsprotokolls vorgesehen sein. Die Simulationsfunktion bestimmt aus einem für die Klasse spezifischen Signal ein für den peripheren Simulator spezifisches Signal und umgekehrt. Die Simulationsfunktion bestimmt beispielsweise aus einer Größe oder mehreren Größen aus dem für die Klasse spezifischen Signal eine Größe oder mehrere Größen aus dem für den peripheren Simulator spezifisches Signal und umgekehrt. Das für die Klasse spezifische Signal umfasst die Größen, die für die Simulationsanwendung zur Simulation eines Geräts der Klasse erforderlich sind. Das den peripheren Simulator spezifische Signal umfasst die Größen, die für eine Ansteuerung des peripheren Simulators erforderlich sind. Die Simulationsanwendung und die Kommunikationsprotokolle können dadurch für eine Klasse von peripheren Simulatoren von Systemen zertifiziert werden. Das Einbinden eines weiteren peripheren Simulators eines Systems aus einer bereits bekannten Klasse wird dadurch vereinfacht.

Das funktionale Element umfasst wenigstens eine Instruktion zum Umformatieren eines für den peripheren Simulator spezifischen Signals in ein für die Klasse spezifisches Signal. Das funktionale Element umfasst wenigstens eine Instruktion zum Umformatieren eines für die Klasse spezifischen Signals in ein für den peripheren Simulator spezifisches Signal. Dadurch können besonders einfach auch verschiedene Signale implementiert werden.

Das funktionale Element kann ausgebildet sein, das für den peripheren Simulator spezifische Signal vom peripheren Simulator zu empfangen und das klassenspezifische Signal mit einer Bezeichnung des peripheren Simulators zu senden. Das funktionale Element kann ausgebildet sein, das für die Klasse spezifische Signal mit einer Bezeichnung eines peripheren Simulators zu empfangen und das für den peripheren Simulator spezifische Signal an den durch die Bezeichnung definierten peripheren Simulator zu senden. Dies sind Möglichkeiten, das für die Klasse spezifische Signal dem peripheren Simulator zuzuordnen.

Die erste Schnittstelle kann ausgebildet sein, mit der Simulationsanwendung in einem ersten Datenformat zu kommunizieren, wobei die zweite Schnittstelle ausgebildet ist, mit dem peripheren Simulator in einem zweiten, insbesondere vom ersten Datenformat verschiedenen Datenformat zu kommunizieren. Die Datenformate für den Transport der Signale können sich unabhängig vom Datenformat, in dem die Größen für die Simulation übertragen werden, unterscheiden.

Das funktionale Element kann wenigstens eine Instruktion zum Empfangen des für den peripheren Simulator spezifischen Signals im zweiten Datenformat und zum Senden des für die Klasse spezifischen Signals im ersten Datenformat umfassen. Das funktionale Element kann wenigstens eine Instruktion zum Empfangen des für die Klasse spezifischen Signals im ersten Datenformat und zum Senden des für den peripheren Simulator spezifischen Signals im zweiten Datenformat umfassen. Dies sind Möglichkeiten dafür, einerseits die von der Simulationsfunktion zu verarbeitenden Größen im funktionalen Element aus Signalen für den Transport zu bestimmen und andererseits aus von der Simulationsfunktion verarbeiteten Größen Signale für den Transport zu erzeugen.

Die Simulationsfunktion kann ausgebildet sein, einen für den peripheren Simulator spezifischen Simulationsparameter abhängig von einem für die Klasse spezifischen Simulationsparameter zu bestimmen, oder einen für die Klasse spezifischen Simulationsparameter abhängig von einem für den peripheren Simulator spezifischen Simulationsparameter zu bestimmen. Diese Simulationsparameter können Ist- oder Sollgrößen eines simulierten technischen Echtgeräts sein, das der periphere Simulator nachbildet.

Die Klasse charakterisiert eine Systemart insbesondere ein Radarsystem, ein Waffensystem, ein elektrooptischer Sensor, ein elektromagnetischer Sensor, oder ein Abwehrsystem. Der periphere Simulator bildet ein Subsystem der Systemart nach, insbesondere ein feststehendes Radar oder ein rotierendes Radar. Die Schnittstelle weist eine Vielzahl für unterschiedliche Klassen spezifische funktionale Elemente für unterschiedliche Systemarten auf, die je eine Vielzahl Implementierungen von für unterschiedliche periphere Simulatoren spezifischen Simulationsfunktionen umfassen.

Ein System zum Ansteuern eines peripheren Simulators aus einer Klasse von Simulatoren umfasst einen Kernel und diese Schnittstelle. Der Kernel umfasst die Simulationsanwendung.

Die Simulationsanwendung ist ausgebildet, ein für die Klasse des peripheren Simulators spezifisches Signal zu empfangen, das einen für die Klasse spezifischen ersten Simulationsparameter umfasst, einen für die Klasse spezifischen zweiten Simulationsparameter zu bestimmen und den peripheren Simulator mit einem für die Klasse spezifischen Signal anzusteuern, das den für die Klasse spezifischen zweiten Simulationsparameter umfasst. Die Simulationsanwendung ist damit für die Klasse für den Betrieb freigebbar. Eine erneute Freigabe bei Hinzufügen eines peripheren Simulators zum Simulationsverbund oder bei einer Änderung eines peripheren Simulators im Simulationsverbund ist nicht erforderlich.

Der erste Simulationsparameter kann die Ist- und/oder Sollgröße für die Simulationsanwendung charakterisieren. Der zweite Simulationsparameter kann eine Ist- und/oder Sollgröße für den peripheren Simulator charakterisieren.

Das System kann den peripheren Simulator umfassen, wobei der periphere Simulator ausgebildet ist, einen für den peripheren Simulator spezifischen Simulationsparameter insbesondere eine Ist- und/oder Sollgröße für den peripheren Simulator in einem für den peripheren Simulator spezifischen Signal zu empfangen, und einen Aktor des peripheren Simulators abhängig vom für den peripheren Simulator spezifischen Simulationsparameter anzusteuern. Der periphere Simulator kann Software und Hardware umfassen. Der Aktor kann dazu angesteuert werden, eine Aktion des peripheren Simulators auszuführen oder dazu, eine für einen Nutzer des peripheren Simulators insbesondere optisch, haptisch oder akustisch wahrnehmbare Ausgabe auszugeben.

Es kann vorgesehen sein, dass das funktionale Element das für den peripheren Simulator spezifische Signal vom peripheren Simulator empfängt und das für die Klasse spezifische Signal mit einer Bezeichnung des peripheren Simulators sendet.

Es kann vorgesehen sein, dass das funktionale Element das für die Klasse spezifische Signal mit einer Bezeichnung des peripheren Simulators empfängt und das für den peripheren Simulator spezifische Signal an den durch die Bezeichnung definierten peripheren Simulator sendet.

Es kann vorgesehen sein, dass die erste Schnittstelle zumindest zeitweise mit der Simulationsanwendung in einem ersten Datenformat kommuniziert, wobei die zweite Schnittstelle zumindest zeitweise mit dem peripheren Simulator in einem zweiten, vom ersten Datenformat verschiedenen Datenformat kommuniziert.

Es kann vorgesehen sein, dass das funktionale Element wenigstens eine Instruktion zum Empfangen des für den peripheren Simulator spezifischen Signals im zweiten Datenformat und zum Senden des für die Klasse spezifischen Signals im ersten Datenformat ausführt.

Es kann vorgesehen sein, dass das funktionale Element wenigstens eine Instruktion zum Empfangen des für die Klasse spezifischen Signals im ersten Datenformat und zum Senden des für den peripheren Simulator spezifischen Signals im zweiten Datenformat ausführt.

Es kann vorgesehen sein, dass die Simulationsfunktion einen für den peripheren Simulator spezifischen Simulationsparameter abhängig von einem für die Klasse spezifischen Simulationsparameter bestimmt, oder einen für die Klasse spezifischen Simulationsparameter abhängig von einem für den peripheren Simulator spezifischen Simulationsparameter bestimmt.

Es kann vorgesehen sein, dass die Simulationsfunktion einen für den peripheren Simulator spezifischen Simulationsparameter abhängig von einem für die Klasse spezifischen Simulationsparameter bestimmt, oder einen für die Klasse spezifischen Simulationsparameter abhängig von einem für den peripheren Simulator spezifischen Simulationsparameter bestimmt.

Weitere vorteilhafte Ausführungsformen ergeben sich aus der folgenden Beschreibung und der Zeichnung. In der Zeichnung zeigt:
- Fig. 1: eine schematische Ansicht eines Systems,
- Fig. 2: Schritte in einem Verfahren zum Betreiben des Systems.

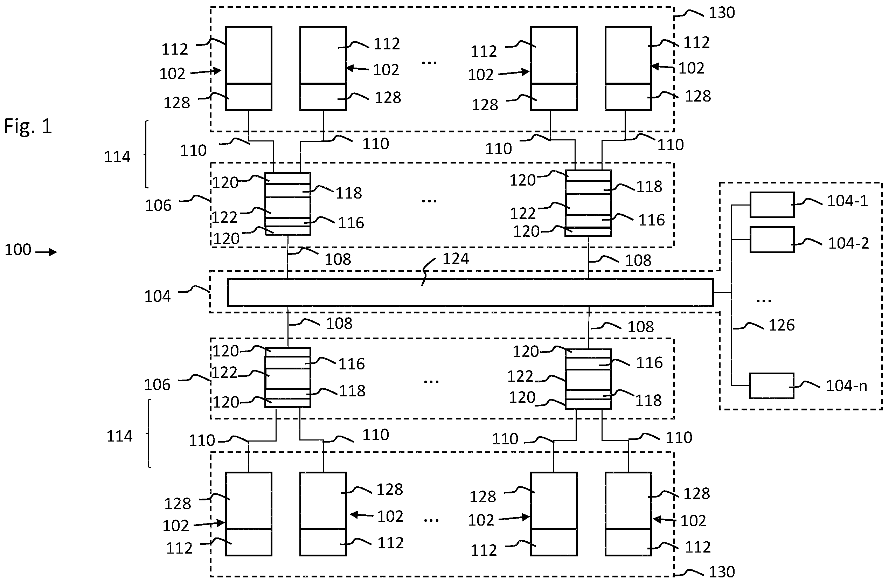

In Figur 1 ist ein System 100 zum Ansteuern eines peripheren Simulators 102 schematisch dargestellt.

Das System 100 umfasst einen peripheren Simulator 102 aus einer Klasse von Simulatoren, einen Kernel 104 und eine Schnittstelle 106. Im Beispiel umfasst das System eine Vielzahl peripherer Simulatoren 102 aus verschiedenen Klassen.

Die Klasse charakterisiert eine Systemart. Die Systemart kann ein Radarsystem, ein Waffensystem, ein elektrooptischer Sensor, ein elektromagnetischer Sensor, oder ein Abwehrsystem sein.

Der periphere Simulator 102 bildet im Beispiel ein Subsystem der Systemart nach. Der periphere Simulator 102 kann beispielsweise ein feststehendes Radar oder ein rotierendes Radar, nachbilden. Das feststehende Radar und das rotierende Radar sind im Beispiel der Klasse Radarsystem zugeordnet. Nachbildungen von Operationszentralen unterschiedlicher Schiffstypen können durch die Kombination von unterschiedliche Klassen nachgebildet werden.

Der Kernel 104 umfasst eine Simulationsanwendung. Die Simulationsanwendung umfasst im Beispiel mehrere Teile, die in Figur 1 mit den Bezugszeichen 104-1, ..., 104-n bezeichnet sind.

Die Simulationsanwendung ist ausgebildet, ein für die Klasse des peripheren Simulators 102 spezifisches Signal 108 zu empfangen, das einen für die Klasse spezifischen ersten Simulationsparameter umfasst. Im Beispiel ist die Simulationsanwendung ausgebildet, einen für die Klasse Radarsystem spezifischen ersten Simulationsparameter unabhängig davon zu verarbeiten, ob es sich beim peripheren Simulator um ein feststehendes Radar oder ein rotierendes Radar handelt.

Der erste Simulationsparameter kann eine Ist- und/oder Sollgröße für die Simulationsanwendung 104-1, ..., 104-n charakterisieren. Im Beispiel wird eine Ist- oder Sollgröße verwendet, die eine Betriebsgröße eines Radarsystems charakterisiert.

Die Simulationsanwendung kann ausgebildet sein, eine Vielzahl erster Simulationsparametern von verschiedenen peripheren Simulatoren 102 zu empfangen.

Die Simulationsanwendung ist ausgebildet, einen für die Klasse spezifischen zweiten Simulationsparameter zu bestimmen. Im Beispiel ist die Simulationsanwendung ausgebildet, einen für die Klasse Radarsystem spezifischen zweiten Simulationsparameter unabhängig davon zu verarbeiten, ob es sich beim peripheren Simulator um ein feststehendes Radar oder ein rotierendes Radar handelt.

Der zweite Simulationsparameter eine Ist- und/oder Sollgröße für den peripheren Simulator 102 charakterisieren. Im Beispiel wird eine Ist- oder Sollgröße verwendet, die eine Betriebsgröße eines Radarsystems charakterisiert.

Die Simulationsanwendung kann ausgebildet sein, abhängig vom ersten Simulationsparameter eine Vielzahl zweiter Simulationsparameter für andere periphere Simulatoren 102 zu bestimmen. Die Simulationsanwendung kann ausgebildet sein, den zweiten Simulationsparameter abhängig von der Vielzahl der ersten Simulationsparameter zu bestimmen.

Die Simulationsanwendung ist ausgebildet, den peripheren Simulator mit einem für die Klasse spezifischen Signal 108 anzusteuern, das den für die Klasse spezifischen zweiten Simulationsparameter umfasst.

Der periphere Simulator 102 kann ausgebildet sein, ein für den peripheren Simulator 102 spezifischen Simulationsparameter insbesondere eine Ist- und/oder Sollgröße für den peripheren Simulator 102 in einem für den peripheren Simulator 102 spezifischen Signal 110 zu empfangen, und einen Aktor 112 des peripheren Simulators 102 abhängig vom für den peripheren Simulator 102 spezifischen Simulationsparameter anzusteuern.

Der periphere Simulator 102 kann ausgebildet sein, den Aktor 112 dazu anzusteuern, eine Aktion des peripheren Simulators 102 auszuführen oder dazu, eine für einen Nutzer des peripheren Simulators 102 insbesondere optisch, haptisch oder akustisch wahrnehmbare Ausgabe auszugeben.

Die Schnittstelle 106 für eine Kommunikation zwischen der Simulationsanwendung und einer Kommunikationslinie 114 z.B. eine Point-to-Point Verbindung wird im Folgenden beschrieben.

Die Schnittstelle 106 umfasst eine erste Schnittstelle 116 zur Simulationsanwendung und eine zweite Schnittstelle 118 zu wenigstens einem peripheren Simulator 102. Eine Datenübertragung zwischen der Simulationsanwendung und der ersten Schnittstelle 116 und eine Datenübertragung zwischen dem wenigstens einen peripheren Simulator 102 und der zweiten Schnittstelle 118 erfolgt beispielsweise über eine Kommunikationseinrichtung 120.

Die Kommunikationseinrichtung 120 ist im Beispiel zur Kommunikation mit einer Infrastruktur 124 und zur Kommunikation mit einer Vielzahl über jeweilige Kommunikationslinien 114 anbindbare periphere Simulatoren 102 ausgebildet. Die Kommunikationseinrichtung 120 kann auch spezifisch für eine bestimmte Klasse von peripheren Simulatoren 102 oder spezifisch für einen bestimmten peripheren Simulator 102 ausgebildet sein.

Zwischen der ersten Schnittstelle 116 und der zweiten Schnittstelle 118 ist ein für eine bestimmte Klasse spezifisches funktionales Element 122 angeordnet.

Das für diese Klasse spezifische funktionale Element 122 umfasst eine Implementierung einer für den peripheren Simulator 102 spezifischen Simulationsfunktion.

Im Beispiel umfasst der Kernel 104 die Infrastruktur 124. Die Infrastruktur 124 ist ausgebildet, für die Klasse spezifische Signale 108 zu senden und zu Empfangen. Ein Kommunikationsnetzwerk 126 verbindet im Beispiel die Teile der Simulationsanwendung 104-1, ..., 104-n untereinander und mit der Infrastruktur 124.

Der periphere Simulator 102 umfasst im Beispiel eine Recheneinrichtung 128, die ausgebildet ist, mit der Schnittstelle 106 mittels für den peripheren Simulator 102 spezifischen Signale 110 zu kommunizieren. Die Recheneinrichtung 128 ist im Beispiel ausgebildet, für den peripheren Simulator 102 spezifische Funktionen, beispielsweise Ansteuerungen des Aktors 112 auszuführen.

Die peripheren Simulatoren 102 sind im Beispiel zu einem Verbund 130 zusammengefasst, in dem eine Simulation mit der Simulationsanwendung ausführbar ist.

Das funktionale Element 122 und die Simulationsfunktion werden im Folgenden für einen peripheren Simulator 102 aus einer bestimmten Klasse beschrieben. Das funktionale Element und die Simulationsfunktion für andere periphere Simulatoren 102 aus derselben Klasse können genauso ausgebildet sein. Für periphere Simulatoren 102 aus einer anderen Klasse ist ein für diese Klasse ausgebildetes funktionales Element 122 und eine für diese Klasse ausgebildete Simulationsfunktion vorgesehen.

Die Simulationsfunktion ist in einem Aspekt ausgebildet den für den peripheren Simulator 102 spezifischen Simulationsparameter abhängig von dem für die Klasse spezifischen zweiten Simulationsparameter zu bestimmen.

Im Beispiel ist die Simulationsfunktion ausgebildet, den für die Klasse Radarsystem spezifischen zweiten Simulationsparameter abhängig davon zu verarbeiten, ob es sich beim peripheren Simulator um ein feststehendes Radar oder ein rotierendes Radar handelt.

Die Simulationsfunktion ist in einem Aspekt ausgebildet den für die Klasse spezifischen ersten Simulationsparameter abhängig von einem für den peripheren Simulator spezifischen Simulationsparameter zu bestimmen.

Im Beispiel ist die Simulationsfunktion ausgebildet, den für die Klasse Radarsystem spezifischen ersten Simulationsparameter abhängig davon zu verarbeiten, ob es sich beim peripheren Simulator um ein feststehendes Radar oder ein rotierendes Radar handelt.

Dadurch kann der Kernel für eine Systemart, d.h. eine Klasse, zertifiziert werden. Ein neues Subsystem einer bereits zertifizierten Systemart kann dann über die Schnittstelle 106 hinzugefügt werden, ohne das Ergebnis der Zertifizierung des Kernels zu verändern. Eine Zertifizierung der Schnittstelle 106 kann durch eine Zertifizierung des funktionalen Elements für die Klasse, das die Simulationsfunktion umfasst, erfolgen.

Die Schnittstelle 106 weist in einem Aspekt eine Vielzahl für unterschiedliche Klassen spezifische funktionale Elemente 122 für unterschiedliche Systemarten auf, die je eine Vielzahl Implementierungen von für unterschiedliche periphere Simulatoren 102 spezifischen Simulationsfunktionen umfassen.

Das funktionale Element 122 kann wenigstens eine Instruktion zum Umformatieren des für den peripheren Simulator 102 spezifischen Signals 110 in ein für die Klasse spezifisches Signal 108 umfassen.

Das funktionale Element 122 kann wenigstens eine Instruktion zum Umformatieren des für die Klasse spezifischen Signals 108 in ein für den peripheren Simulator spezifisches Signal 110 umfasst.

In einem Aspekt ist das funktionale Element 122 ausgebildet, das für den peripheren Simulator 102 spezifische Signal 110 vom peripheren Simulator 102 zu empfangen und das klassenspezifisches Signal 108 mit einer Bezeichnung des peripheren Simulators 102 zu senden.

Das funktionale Element 122 kann ausgebildet sein, das für die Klasse spezifische Signal 108 mit einer Bezeichnung eines peripheren Simulators 102 zu empfangen und das für den peripheren Simulator 102 spezifische Signal 110 an den durch die Bezeichnung definierten peripheren Simulator 102 zu senden.

Die Bezeichnung kann den peripheren Simulator 102 in einer einzelnen Trainingsumgebung bezeichnen und in einer Vielzahl verschiedener Trainingsumgebungen verwendet werden.

Die erste Schnittstelle 116 ist in einem Aspekt ausgebildet, mit der Simulationsanwendung in einem ersten Datenformat zu kommunizieren.

Die zweite Schnittstelle 118 ist in einem Aspekt ausgebildet, mit dem peripheren Simulator 102 in einem zweiten, vom ersten Datenformat verschiedenen Datenformat zu kommunizieren.

Die Kommunikation kann Schnittstellenkonform zu bereits existierenden und zertifizierten Übergängen zwischen Kommunikationssystemen unterschiedlicher vernetzter Elemente erfolgen.

Das funktionale Element 122 kann wenigstens eine Instruktion zum Empfangen des für den peripheren Simulator 102 spezifischen Signals 110 im zweiten Datenformat und zum Senden des für die Klasse spezifischen Signals 108 im ersten Datenformat umfassen.

Das funktionale Element 122 kann wenigstens eine Instruktion zum Empfangen des für die Klasse spezifischen Signals 108 im ersten Datenformat und zum Senden des für den peripheren Simulator 102 spezifischen Signals 110 im zweiten Datenformat umfassen.

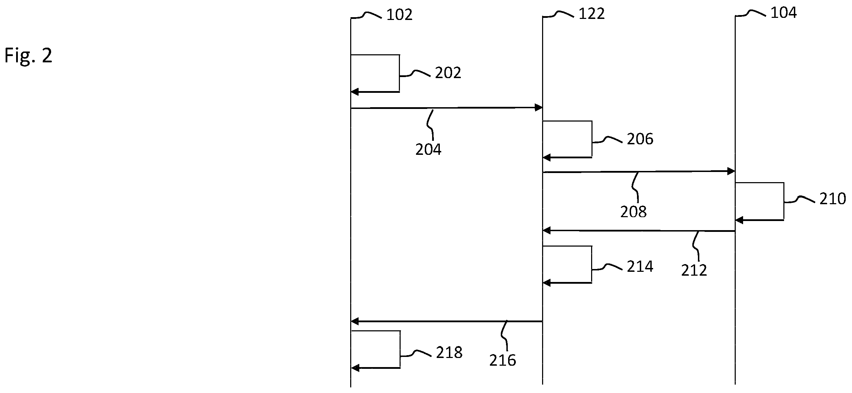

Ein Verfahren zum Betreiben des Systems wird im Folgenden mit Bezug auf Figur 2 beschrieben.

Die Schnittstelle 106 kommuniziert im Verfahren zumindest zeitweise über die erste Schnittstelle 116 zur Simulationsanwendung und über die zweite Schnittstelle 118 zur Kommunikationseinrichtung 120 für die Kommunikationslinie 114.

Die Kommunikationseinrichtung 120 kommuniziert zumindest zeitweise mit dem über die Kommunikationslinie 114 anbindbaren peripheren Simulator 102 aus der Klasse von Simulatoren.

Das zwischen der ersten Schnittstelle 116 und der zweiten Schnittstelle 118 angeordnete, für die Klasse spezifisches funktionales Element 122 führt zumindest zeitweise die Implementierung der für den peripheren Simulator spezifischen Simulationsfunktion aus.

In einem Schritt 202 wird am peripheren Simulator 102 ein für den peripheren Simulator 102 spezifischer Simulationsparameter bestimmt.

In einem Schritt 204 wird der für den peripheren Simulator 102 spezifische Simulationsparameter in einem für den peripheren Simulator 102 spezifischen Signal 110 vom peripheren Simulator 102 an das funktionale Element 122 gesendet.

Es kann das für den peripheren Simulator 102 spezifische Signal 110 vom peripheren Simulator 102 gesendet werden.

In einem Schritt 206 wird vom funktionalen Element 122, insbesondere mit der Simulationsfunktion, abhängig vom für den peripheren Simulator 102 spezifischen Simulationsparameter ein für die Klasse des peripheren Simulators 102 spezifischer Simulationsparameter bestimmt.

Die Simulationsfunktion kann einen für den peripheren Simulator 102 spezifischen Simulationsparameter abhängig von einem für die Klasse spezifischen Simulationsparameter bestimmen.

Das funktionale Element 122 kann wenigstens eine Instruktion zum Empfangen des für den peripheren Simulator 102 spezifischen Signals 110 im zweiten Datenformat und zum Senden des für die Klasse spezifischen Signals 108 im ersten Datenformat ausführen.

In einem Schritt 208 wird der für die Klasse des peripheren Simulators 102 spezifische Simulationsparameter in einem für die Klasse des peripheren Simulators 102 spezifischen Signal 108 vom funktionalen Element 122 an den Kernel 104 gesendet.

Das für die Klasse spezifische Signal 108 kann mit einer Bezeichnung des peripheren Simulators 102 gesendet werden.

In einem Schritt 210 wird am Kernel 104 ein Simulationsschritt abhängig vom für die Klasse des peripheren Simulators 102 spezifischen Simulationsparameter ausgeführt. Im Beispiel wird ein für die Klasse des peripheren Simulators 102 spezifischer Simulationsparameter zur Ansteuerung des peripheren Simulators 102 bestimmt.

In einem Schritt 212 wird der für die Klasse des peripheren Simulators 102 spezifische Simulationsparameter zur Ansteuerung des peripheren Simulators 102 in einem für die Klasse des peripheren Simulators 102 spezifischen Signal 108 vom Kernel 104 an das funktionale Element 122 gesendet.

Das funktionale Element 122 kann das für die Klasse spezifische Signal 108 mit der Bezeichnung des peripheren Simulators 102 empfangen.

In einem Schritt 214 wird vom funktionalen Element 122, insbesondere mit der Simulationsfunktion, abhängig für die Klasse des peripheren Simulators 102 spezifischen Simulationsparameter ein für den peripheren Simulator 102 spezifischer Simulationsparameter bestimmt.

Es kann ein für die Klasse spezifischer Simulationsparameter abhängig von einem für den peripheren Simulator spezifischen Simulationsparameter bestimmt werden.

In einem Schritt 216 wird der für den peripheren Simulator 102 spezifische Simulationsparameter in einem für den peripheren Simulator 102 spezifischen Signal 110 vom funktionalen Element 122 an den peripheren Simulator 102 gesendet.

Das für den peripheren Simulator 102 spezifische Signal 110 kann an den durch die Bezeichnung definierten peripheren Simulator 102 gesendet werden.

In einem Schritt 218 wird der periphere Simulator 102 abhängig von dem für den peripheren Simulator 102 spezifische Simulationsparameter angesteuert.

In einem Aspekt kann vorgesehen sein, dass die Simulationsanwendung Signale vom peripheren Simulator 102 empfängt ohne diesen anzusteuern. Das Verfahren kann dann ohne die Schritte 212 bis 218 ausgeführt werden.

In einem Aspekt kann vorgesehen sein, dass die Simulationsanwendung den peripheren Simulator 102 ansteuert, ohne Signale von diesem zu Empfangen. Das Verfahren kann dann ohne die Schritte 202 bis 208 ausgeführt werden.

Das Verfahren kann vorsehen, dass die Simulationsanwendung im Simulationsschritt eine Vielzahl Signale von einer Vielzahl peripherer Simulatoren 102 verarbeitet und eine Vielzahl peripherer Simulatoren 102 mit Signalen ansteuert.

Die erste Schnittstelle 116 kommuniziert dabei im Beispiel zumindest zeitweise mit der Simulationsanwendung im ersten Datenformat.

Die zweite Schnittstelle 118 kommuniziert dabei im Beispiel zumindest zeitweise mit dem peripheren Simulator 102 im zweiten, vom ersten Datenformat verschiedenen Datenformat

Das funktionale Element 122 kann wenigstens eine Instruktion zum Empfangen des für die Klasse spezifischen Signals 108 im ersten Datenformat und zum Senden des für den peripheren Simulator 102 spezifischen Signals 110 im zweiten Datenformat ausführen.

Der periphere Simulator 102 kann einen oder mehrere Prozessoren und einen oder mehrere Speicher umfassen, die ausgebildet sind, zusammenzuwirken um Schritte im Verfahren, die im peripheren Simulator 102 ablaufen, auszuführen. Die Schnittstelle 106 kann einen oder mehrere Prozessoren und einen oder mehrere Speicher umfassen, die ausgebildet sind, zusammenzuwirken um Schritte im Verfahren, die in der Schnittstelle 106 ablaufen, auszuführen. Der Kernel 104 kann einen oder mehrere Prozessoren und einen oder mehrere Speicher umfassen, die ausgebildet sind, zusammenzuwirken um Schritte im Verfahren, die im Kernel 104 ablaufen, auszuführen.

## Patentansprüche

1. Schnittstelle (106) für eine Kommunikation zwischen einer Simulationsanwendung (104-1, ..., 104-n) und einem peripheren Simulator (102) aus einer Klasse von Simulatoren (102), wobei die Schnittstelle (106) eine erste Schnittstelle (116) zur Simulationsanwendung (104-1, ..., 104-n) und eine zweite Schnittstelle (118) zum peripheren Simulator (102) aufweist, wobei zwischen der ersten Schnittstelle (116) und der zweiten Schnittstelle (118) ein für die Klasse spezifisches funktionales Element (122) angeordnet ist, das eine Implementierung einer für den peripheren Simulator (102) spezifischen Simulationsfunktion umfasst, wobei das funktionale Element (122) wenigstens eine Instruktion zum Umformatieren eines für den peripheren Simulator (102) spezifischen Signals (110) in ein für die Klasse spezifisches Signal (108) umfasst und/oder wobei das funktionale Element (122) wenigstens eine Instruktion zum Umformatieren eines für die Klasse spezifischen Signals (108) in ein für den peripheren Simulator spezifisches Signal (110) umfasst, wobei die Klasse eine Systemart charakterisiert und der periphere Simulator (102) ein Subsystem der Systemart nachbildet, wobei die Schnittstelle (106) eine Vielzahl für unterschiedliche Klassen spezifische funktionale Elemente (122) für unterschiedliche Systemarten aufweist, die je eine Vielzahl Implementierungen von für unterschiedliche periphere Simulatoren (102) spezifischen Simulationsfunktionen umfassen.

2. Schnittstelle (106) nach Anspruch 1, **dadurch gekennzeichnet, dass** das funktionale Element (122) ausgebildet ist, das für den peripheren Simulator (102) spezifische Signal (110) vom peripheren Simulator (102) zu empfangen und das klassenspezifisches Signal (108) mit einer Bezeichnung des peripheren Simulators (102) zu senden.

3. Schnittstelle (106) nach einem der Ansprüche 1 oder 2, **dadurch gekennzeichnet, dass** das funktionale Element (122) ausgebildet ist, das für die Klasse spezifische Signal (108) mit einer Bezeichnung eines peripheren Simulators (102) zu empfangen und das für den peripheren Simulator (102) spezifische Signal (110) an den durch die Bezeichnung definierten peripheren Simulator (102) zu senden.

4. Schnittstelle (106) nach einem der Ansprüche 1 bis 3, **dadurch gekennzeichnet, dass** die erste Schnittstelle (116) ausgebildet ist, mit der Simulationsanwendung (104-1, ..., 104-n) in einem ersten Datenformat zu kommunizieren, wobei die zweite Schnittstelle (118) ausgebildet ist, mit dem peripheren Simulator (102) in einem zweiten, insbesondere vom ersten Datenformat verschiedenen Datenformat zu kommunizieren.

5. Schnittstelle (106) nach Anspruch 4, **dadurch gekennzeichnet, dass** das funktionale Element (122) wenigstens eine Instruktion zum Empfangen des für den peripheren Simulator (102) spezifischen Signals (110) im zweiten Datenformat und zum Senden des für die Klasse spezifischen Signals (108) im ersten Datenformat umfasst.

6. Schnittstelle (106) nach einem der Ansprüche 4 oder **5, dadurch gekennzeichnet, dass** das funktionale Element (122) wenigstens eine Instruktion zum Empfangen des für die Klasse spezifischen Signals (108) im ersten Datenformat und zum Senden des für den peripheren Simulator (102) spezifischen Signals (110) im zweiten Datenformat umfasst.

7. Schnittstelle (106) nach einem der vorherigen Ansprüche, **dadurch gekennzeichnet, dass** die Simulationsfunktion ausgebildet ist einen für den peripheren Simulator spezifischen Simulationsparameter abhängig von einem für die Klasse spezifischen Simulationsparameter zu bestimmen, oder einen für die Klasse spezifischen Simulationsparameter abhängig von einem für den peripheren Simulator spezifischen Simulationsparameter zu bestimmen.

8. Schnittstelle (106) nach einem der vorherigen Ansprüche, **dadurch gekennzeichnet, dass** die Klasse ein Radarsystem charakterisiert und der periphere Simulator (102) ein feststehendes Radar oder ein rotierendes Radar nachbildet, oder wobei die Klasse ein Waffensystem charakterisiert und der periphere Simulator (102) ein Subsystem der Klasse Waffensystem nachbildet, oder wobei die Klasse einen elektrooptischen Sensor charakterisiert und der periphere Simulator (102) ein Subsystem der Klasse elektrooptischer Sensor nachbildet, oder wobei die Klasse einen elektromagnetischen Sensor charakterisiert und der periphere Simulator (102) ein Subsystem der Klasse elektromagnetischer Sensor nachbildet, oder wobei die Klasse ein Abwehrsystem charakterisiert und der periphere Simulator (102) ein Subsystem der Klasse Abwehrsystem nachbildet.

9. System (100) zum Ansteuern eines peripheren Simulators (102) aus einer Klasse von Simulatoren, **dadurch gekennzeichnet, dass** das System (100) einen Kernel (104) und die Schnittstelle (106) nach einem der Ansprüche 1 bis 7 umfasst, wobei der Kernel (104) die Simulationsanwendung (104-1, ..., 104-n) umfasst, und wobei die Simulationsanwendung (104-1, ..., 104-n) ausgebildet ist, ein für die Klasse des peripheren Simulators (102) spezifisches Signal (108) zu empfangen, das einen für die Klasse spezifischen ersten Simulationsparameter umfasst, einen für die Klasse spezifischen zweiten Simulationsparameter zu bestimmen und den peripheren Simulator mit einem für die Klasse spezifischen Signal (108) anzusteuern, das den für die Klasse spezifischen zweiten Simulationsparameter umfasst.

10. System (100) nach Anspruch 9, **dadurch gekennzeichnet, dass** der erste Simulationsparameter eine Ist- und/oder Sollgröße für die Simulationsanwendung (104-1, ..., 104-n) charakterisiert und/oder der zweite Simulationsparameter eine Ist- und/oder Sollgröße für den peripheren Simulator (102) charakterisiert.

11. System (100) nach Anspruch 9 oder 10, **dadurch gekennzeichnet, dass** das System (100) den peripheren Simulator (102) umfasst, wobei der periphere Simulator (102) ausgebildet ist, einen für den peripheren Simulator (102) spezifischen Simulationsparameter insbesondere eine Ist- und/oder Sollgröße für den peripheren Simulator (102) in einem für den peripheren Simulator (102) spezifischen Signal (110) zu empfangen, und einen Aktor (112) des peripheren Simulators (102) abhängig vom für den peripheren Simulator (102) spezifischen Simulationsparameter anzusteuern.

12. System (100) nach Anspruch 11, **dadurch gekennzeichnet, dass** der Aktor (112) dazu angesteuert wird, eine Aktion des peripheren Simulators (102) auszuführen oder dazu, eine für einen Nutzer des peripheren Simulators (102) insbesondere optisch, haptisch oder akustisch wahrnehmbare Ausgabe auszugeben.

13. Verfahren zum Betreiben einer Schnittstelle (106) für eine Kommunikation zwischen einer Simulationsanwendung (104-1, ..., 104-n) und einem peripheren Simulator (102) aus einer Klasse von Simulatoren, wobei die Schnittstelle (106) zumindest zeitweise über eine erste Schnittstelle (116) zur Simulationsanwendung (104-1, ..., 104-n) kommuniziert (208, 214) und über eine zweite Schnittstelle (118) zumindest zeitweise mit dem peripheren Simulator (102) kommuniziert (204, 216), wobei ein zwischen der ersten Schnittstelle (116) und der zweiten Schnittstelle (118) angeordnetes, für die Klasse spezifisches funktionales Element (122) zumindest zeitweise eine Implementierung einer für den peripheren Simulator spezifischen Simulationsfunktion ausführt (206, 214), wobei das funktionale Element (122) wenigstens eine Instruktion zum Umformatieren eines für den peripheren Simulator (102) spezifischen Signals (110) in ein für die Klasse spezifisches Signal (108) ausführt (206) und/oder wobei das funktionale Element (122) wenigstens eine Instruktion zum Umformatieren eines für die Klasse spezifischen Signals (108) in ein für den peripheren Simulator (102) spezifisches Signal (110) ausführt, wobei die Klasse eine Systemart charakterisiert und der periphere Simulator (102) ein Subsystem der Systemart nachbildet, wobei die Schnittstelle (106) eine Vielzahl für unterschiedliche Klassen spezifische funktionale Elemente (122) für unterschiedliche Systemarten aufweist, die je eine Vielzahl Implementierungen von für unterschiedliche periphere Simulatoren (102) spezifischen Simulationsfunktionen umfassen.

14. Verfahren nach Anspruch 13, **dadurch gekennzeichnet, dass**, das funktionale Element (122) das für den peripheren Simulator (102) spezifische Signal (110) vom peripheren Simulator (102) empfängt (204) und das für die Klasse spezifische Signal (108) mit einer Bezeichnung des peripheren Simulators (102) sendet (208).

15. Verfahren nach Anspruch 13 oder 14, **dadurch gekennzeichnet, dass** das funktionale Element (122) das für die Klasse spezifische Signal (108) mit einer Bezeichnung des peripheren Simulators (102) empfängt (212) und das für den peripheren Simulator (102) spezifische Signal (110) an den durch die Bezeichnung definierten peripheren Simulator (102) sendet (216).

16. Verfahren nach Anspruch 13 bis 15, **dadurch gekennzeichnet, dass** die erste Schnittstelle (116) zumindest zeitweise mit der Simulationsanwendung (104-1, ..., 104-n) in einem ersten Datenformat kommuniziert (208, 212), wobei die zweite Schnittstelle (118) zumindest zeitweise mit dem peripheren Simulator (102) in einem zweiten, vom ersten Datenformat verschiedenen Datenformat kommuniziert (204, 216).

17. Verfahren nach Anspruch 16, **dadurch gekennzeichnet, dass** das funktionale Element (122) wenigstens eine Instruktion zum Empfangen des für den peripheren Simulator (102) spezifischen Signals (110) im zweiten Datenformat und zum Senden des für die Klasse spezifischen Signals (108) im ersten Datenformat ausführt (206).

18. Verfahren nach Anspruch 16 oder 17, **dadurch gekennzeichnet, dass** das funktionale Element (122) wenigstens eine Instruktion zum Empfangen des für die Klasse spezifischen Signals (108) im ersten Datenformat und zum Senden des für den peripheren Simulator (102) spezifischen Signals (110) im zweiten Datenformat ausführt (214).

19. Verfahren nach einem der Ansprüche 12 bis **17, dadurch gekennzeichnet, dass** die Simulationsfunktion einen für den peripheren Simulator (102) spezifischen Simulationsparameter abhängig von einem für die Klasse spezifischen Simulationsparameter bestimmt (206), oder einen für die Klasse spezifischen Simulationsparameter abhängig von einem für den peripheren Simulator spezifischen Simulationsparameter bestimmt (214).

20. Verfahren nach einem der Ansprüche 13 bis **19, dadurch gekennzeichnet, dass** die Klasse ein Radarsystem charakterisiert und der periphere Simulator (102) ein feststehendes Radar oder ein rotierendes Radar nachbildet, oder wobei die Klasse ein Waffensystem charakterisiert und der periphere Simulator (102) ein Subsystem der Klasse Waffensystem nachbildet, oder wobei die Klasse einen elektrooptischen Sensor charakterisiert und der periphere Simulator (102) ein Subsystem der Klasse elektrooptischer Sensor nachbildet, oder wobei die Klasse einen elektromagnetischen Sensor charakterisiert und der periphere Simulator (102) ein Subsystem der Klasse elektromagnetischer Sensor nachbildet, oder wobei die Klasse ein Abwehrsystem charakterisiert und der periphere Simulator (102) ein Subsystem der Klasse Abwehrsystem nachbildet.

## Claims

1. Interface (106) for communication between a simulation application (104-1, ..., 104-n) and a peripheral simulator (102) from a class of simulators (102), wherein the interface (106) has a first interface (116) to the simulation application (104-1, ..., 104-n) and a second interface (118) to the peripheral simulator (102), wherein a class-specific functional element (122) is arranged between the first interface (116) and the second interface (118), which functional element comprises an implementation of a simulation function specific to the peripheral simulator (102), wherein the functional element (122) comprises at least one instruction for reformatting a signal (110) specific to the peripheral simulator (102) into a class-specific signal (108) and/or wherein the functional element (122) comprises at least one instruction for reformatting a class-specific signal (108) into a signal (110) specific to the peripheral simulator, wherein the class characterizes a system type and the peripheral simulator (102) models a subsystem of the system type, wherein the interface (106) has a plurality of different class-specific functional elements (122) for different system types, which functional elements each comprise a plurality of implementations of simulation functions specific to different peripheral simulators (102).

2. Interface (106) according to claim 1, **characterized in that** the functional element (122) is configured to receive the signal (110) specific to the peripheral simulator (102) from the peripheral simulator (102) and to send the class-specific signal (108) together with a designation of the peripheral simulator (102).

3. Interface (106) according to either of claims 1 or 2, **characterized in that** the functional element (122) is configured to receive the class-specific signal (108) together with a designation of a peripheral simulator (102) and to send the signal (110) specific to the peripheral simulator (102) to the peripheral simulator (102) defined by the designation.

4. Interface (106) according to any of claims 1 to 3, **characterized in that** the first interface (116) is configured to communicate with the simulation application (104-1, ..., 104-n) in a first data format, the second interface (118) being configured to communicate with the peripheral simulator (102) in a second data format, in particular which is different from the first data format.

5. Interface (106) according to claim 4, **characterized in that** the functional element (122) comprises at least one instruction for receiving the signal (110) specific to the peripheral simulator (102) in the second data format and for sending the class-specific signal (108) in the first data format.

6. Interface (106) according to either of claims 4 or 5, **characterized in that** the functional element (122) comprises at least one instruction for receiving the class-specific signal (108) in the first data format and for sending the signal (110) specific to the peripheral simulator (102) in the second data format.

7. Interface (106) according to any of the preceding claims, **characterized in that** the simulation function is designed to determine a simulation parameter specific to the peripheral simulator depending on a class-specific simulation parameter, or to determine a class-specific simulation parameter depending on a simulation parameter specific to the peripheral simulator.

8. Interface (106) according to any of the preceding claims, **characterized in that** the class characterizes a radar system and the peripheral simulator (102) models a fixed radar or a rotating radar, or the class characterizing a weapon system and the peripheral simulator (102) modeling a subsystem of the weapon system class, or the class characterizing an electro-optical sensor and the peripheral simulator (102) modeling a subsystem of the electro-optical sensor class, or the class characterizing an electromagnetic sensor and the peripheral simulator (102) modeling a subsystem of the electromagnetic sensor class, or the class characterizing a defense system and the peripheral simulator (102) modeling a subsystem of the defense system class.

9. System (100) for controlling a peripheral simulator (102) from a class of simulators, **characterized in that** the system (100) comprises a kernel (104) and the interface (106) according to any of claims 1 to 7, the kernel (104) comprising the simulation application (104-1, ..., 104-n), and the simulation application (104-1, ..., 104-n) being configured to receive a signal (108) specific to the class of the peripheral simulator (102) and comprising a first class-specific simulation parameter, to determine a second class-specific simulation parameter, and to control the peripheral simulator using a class-specific signal (108) which comprises the second class-specific simulation parameter.

10. System (100) according to claim 9, **characterized in that** the first simulation parameter characterizes an actual value and/or target value for the simulation application (104-1, ..., 104-n) and/or the second simulation parameter characterizes an actual value and/or target value for the peripheral simulator (102).

11. System (100) according to claim 9 or claim 10, **characterized in that** the system (100) comprises the peripheral simulator (102), the peripheral simulator (102) being configured to receive a simulation parameter specific to the peripheral simulator (102), in particular an actual value and/or target value for the peripheral simulator (102), in a signal (110) specific to the peripheral simulator (102), and to control an actuator (112) of the peripheral simulator (102) depending on the simulation parameter specific to the peripheral simulator (102).

12. System (100) according to claim 11, **characterized in that** the actuator (112) is controlled to perform an action of the peripheral simulator (102) or to produce an output that is perceptible to a user of the peripheral simulator (102), in particular visually, haptically or acoustically.

13. Method for operating an interface (106) for communication between a simulation application (104-1, ..., 104-n) and a peripheral simulator (102) from a class of simulators, wherein the interface (106) communicates (208, 214), at least at times, with the simulation application (104-1, ..., 104-n) via a first interface (116) and communicates (204, 216), at least at times, with the peripheral simulator (102) via a second interface (118), wherein a class-specific functional element (122) arranged between the first interface (116) and the second interface (118) performs (206, 214), at least at times, an implementation of a simulation function specific to the peripheral simulator, wherein the functional element (122) performs (206) at least one instruction for reformatting a signal (110) specific to the peripheral simulator (102) into a class-specific signal (108) and/or wherein the functional element (122) performs at least one instruction for reformatting a class-specific signal (108) into a signal (110) specific to the peripheral simulator (102), wherein the class characterizes a system type and the peripheral simulator (102) models a subsystem of the system type, wherein the interface (106) has a plurality of different class-specific functional elements (122) for different system types, which functional elements each comprise a plurality of implementations of specific simulation functions for different peripheral simulators (102).

14. Method according to claim 13, **characterized in that** the functional element (122) receives (204) the signal (110) specific to the peripheral simulator (102) from the peripheral simulator (102) and sends (208) the class-specific signal (108) together with a designation of the peripheral simulator (102).

15. Method according to claim 13 or claim 14, **characterized in that** the functional element (122) receives (212) the class-specific signal (108) together with a designation of the peripheral simulator (102) and sends (216) the signal (110) specific to the peripheral simulator (102) to the peripheral simulator (102) defined by the designation.

16. Method according to claims 13 to 15, **characterized in that** the first interface (116) communicates (208, 212), at least at times, with the simulation application (104-1, ..., 104-n) in a first data format, the second interface (118) communicating (204, 216), at least at times, with the peripheral simulator (102) in a second data format which is different from the first data format.

17. Method according to claim 16, **characterized in that** the functional element (122) performs (206) at least one instruction for receiving the signal (110) specific to the peripheral simulator (102) in the second data format and for sending the class-specific signal (108) in the first data format.

18. Method according to claim 16 or claim 17, **characterized in that** the functional element (122) performs (214) at least one instruction for receiving the class-specific signal (108) in the first data format and for sending the signal (110) specific to the peripheral simulator (102) in the second data format.

19. Method according to any of claims 12 to 17, **characterized in that** the simulation function determines (206) a simulation parameter specific to the peripheral simulator (102) depending on a class-specific simulation parameter, or determines (214) a class-specific simulation parameter depending on a simulation parameter specific to the peripheral simulator.

20. Method according to any of claims 13 to 19, **characterized in that** the class characterizes a radar system and the peripheral simulator (102) models a fixed radar or a rotating radar, or the class characterizing a weapon system and the peripheral simulator (102) modeling a subsystem of the weapon system class, or the class characterizing an electro-optical sensor and the peripheral simulator (102) modeling a subsystem of the electro-optical sensor class, or the class characterizing an electromagnetic sensor and the peripheral simulator (102) modeling a subsystem of the electromagnetic sensor class, or the class characterizing a defense system and the peripheral simulator (102) modeling a subsystem of the defense system class.

## Revendications

1. Interface (106) pour une communication entre une application de simulation (104-1, ..., 104-n) et un simulateur périphérique (102) parmi une classe de simulateurs (102), dans lequel l'interface (106) comprend une première interface (116) vers l'application de simulation (104-1, ..., 104-n) et une deuxième interface (118) vers le simulateur périphérique (102), dans lequel un élément fonctionnel (122) spécifique à la classe est intercalé entre la première interface (116) et la deuxième interface (118), qui comprend une implémentation d'une fonction de simulation spécifique au simulateur périphérique (102), dans lequel ledit élément fonctionnel (122) comprend au moins une instruction de reformatage d'un signal (110) spécifique au simulateur périphérique (102) en un signal (108) spécifique à la classe, et/ou dans lequel ledit élément fonctionnel (122) comprend au moins une instruction de reformatage d'un signal (108) spécifique à la classe en un signal (110) spécifique au simulateur, dans lequel la classe caractérise un type de système et le simulateur périphérique (102) simule un sous-système du type de système, dans lequel l'interface (106) comprend une pluralité d'éléments fonctionnels (122) spécifiques à des classes différentes, pour différents types de systèmes, chacun comprenant une pluralité d'implémentations de fonctions de simulation spécifiques à différents simulateurs périphériques (102).

2. Interface (106) selon la revendication 1, **caractérisée en ce que** l'élément fonctionnel (122) est configuré pour recevoir le signal (110) spécifique au simulateur périphérique (102), en provenance du simulateur périphérique (102) et pour envoyer le signal (108) spécifique à la classe avec une désignation du simulateur périphérique (102).

3. Interface (106) selon l'une quelconque des revendications 1 ou 2, **caractérisée en ce que** l'élément fonctionnel (122) est configuré pour recevoir le signal (108) spécifique à la classe avec une désignation d'un simulateur périphérique (102) et pour envoyer le signal (110) spécifique au simulateur périphérique (102), au simulateur périphérique (102) défini par la désignation.

4. Interface (106) selon l'une quelconque des revendications 1 à 3, **caractérisée en ce que** la première interface (116) est configurée pour communiquer avec l'application de simulation (104-1, ..., 104-n) dans un premier format de données, dans lequel la deuxième interface (118) est configurée pour communiquer avec le simulateur périphérique (102) dans un deuxième format de données, en particulier différent du premier format de données.

5. Interface (106) selon la revendication 4, **caractérisée en ce que** l'élément fonctionnel (122) comprend au moins une instruction permettant de recevoir le signal (110) spécifique au simulateur périphérique (102) dans le deuxième format de données et d'envoyer le signal (108) spécifique à la classe dans le premier format de données.

6. Interface (106) selon la revendication 4 ou 5, **caractérisée en ce que** l'élément fonctionnel (122) comprend au moins une instruction permettant de recevoir le signal (108) spécifique à la classe dans le premier format de données et d'envoyer le signal (110) spécifique au simulateur périphérique (102) dans le deuxième format de données.

7. Interface (106) selon l'une quelconque des revendications précédentes, **caractérisée en ce que** la fonction de simulation est configurée pour déterminer un paramètre de simulation spécifique au simulateur périphérique, en fonction d'un paramètre de simulation spécifique à la classe, ou pour déterminer un paramètre de simulation spécifique à la classe en fonction d'un paramètre de simulation spécifique au simulateur périphérique.

8. Interface (106) selon l'une quelconque des revendications précédentes, **caractérisée en ce que** la classe caractérise un système radar et le simulateur périphérique (102) simule un radar stationnaire ou un radar rotatif, ou dans lequel la classe caractérise un système d'armes et le simulateur périphérique (102) simule un sous-système de la classe de système d'armes, ou dans lequel la classe caractérise un capteur électro-optique et le simulateur périphérique (102) simule un sous-système de la classe de capteur électro-optique, ou dans lequel la classe caractérise un capteur électromagnétique et le simulateur périphérique (102) simule un sous-système de la classe de capteur électromagnétique, ou dans lequel la classe caractérise un système de défense et le simulateur périphérique (102) simule un sous-système de la classe de système de défense.

9. Système (100) de commande d'un simulateur périphérique (102) parmi une classe de simulateurs, **caractérisé en ce que** le système (100) comprend un noyau (104) et une interface (106) selon l'une quelconque des revendications 1 à 7, le noyau (104) comprenant l'application de simulation (104-1, ..., 104-n), et dans lequel ladite application de simulation (104-1, ..., 104-n) est configurée pour recevoir un signal (108) spécifique à la classe du simulateur périphérique (102), qui comprend un premier paramètre de simulation spécifique à la classe, pour déterminer un deuxième paramètre de simulation spécifique à la classe, et pour commander le simulateur périphérique au moyen d'un signal (108) spécifique à la classe, qui comprend le deuxième paramètre de simulation spécifique à la classe.

10. Système (100) selon la revendication 9, **caractérisé en ce que** le premier paramètre de simulation caractérise une valeur réelle et/ou cible pour l'application de simulation (104-1, ..., 104-n) et/ou que le deuxième paramètre de simulation caractérise une valeur réelle et/ou cible pour le simulateur périphérique (102).

11. Système (100) selon la revendication 9 ou 10, **caractérisé en ce que** le système (100) comprend le simulateur périphérique (102), dans lequel le simulateur périphérique (102) est configuré pour recevoir un paramètre de simulation qui est spécifique au simulateur périphérique (102), en particulier une valeur réelle et/ou cible pour le simulateur périphérique (102), sous la forme d'un signal (110) spécifique au simulateur périphérique (102), et pour commander un actionneur (112) du simulateur périphérique (102) en fonction du paramètre de simulation spécifique au simulateur périphérique (102).

12. Système (100) selon la revendication 11, **caractérisé en ce que** l'actionneur (112) est commandé pour exécuter une action du simulateur périphérique (102) ou pour fournir une sortie perceptible par un utilisateur du simulateur périphérique (102), en particulier visuellement, haptiquement ou acoustiquement.

13. Procédé pour faire fonctionner une interface (106) pour une communication entre une application de simulation (104-1, ..., 104-n) et un simulateur périphérique (102) parmi une classe de simulateurs, dans lequel l'interface (106) communique (208, 214) au moins temporairement avec l'application de simulation (104-1, ..., 104-n) via une première interface (116) et communique (204, 216) au moins temporairement avec le simulateur périphérique (102) via une deuxième interface (118), dans lequel un élément fonctionnel (122) spécifique à la classe, qui est disposé entre la première interface (116) et la deuxième interface (118) exécute (206, 214) au moins temporairement une implémentation d'une fonction de simulation spécifique au simulateur périphérique, dans lequel l'élément fonctionnel (122) exécute (206) au moins une instruction de reformatage d'un signal (110) spécifique au simulateur périphérique (102) en un signal (108) spécifique à la classe et/ou dans lequel l'élément fonctionnel (122) exécute au moins une instruction de reformatage d'un signal (108) spécifique à la classe en un signal (110) spécifique au simulateur périphérique (102), dans lequel la classe caractérise un type de système et le simulateur périphérique (102) simule un sous-système du type de système, dans lequel l'interface (106) comprend une pluralité d'éléments fonctionnels (122) spécifiques à différentes classes, pour différents types de systèmes, chacun comprenant une pluralité d'implémentations de fonctions de simulation spécifiques à différents simulateurs périphériques (102).

14. Procédé selon la revendication 13, **caractérisé en ce que** l'élément fonctionnel (122) reçoit (204) le signal (110) spécifique au simulateur périphérique (102), en provenance du simulateur périphérique (102) et envoie (208) le signal (108) spécifique à la classe avec une désignation du simulateur périphérique (102).

15. Procédé selon la revendication 13 ou 14, **caractérisé en ce que** l'élément fonctionnel (122) reçoit (212) le signal (108) spécifique à la classe avec une désignation du simulateur périphérique (102) et envoie (216) le signal (110) spécifique au simulateur périphérique (102) au simulateur périphérique (102) défini par la désignation.

16. Procédé selon les revendications 13 à 15, **caractérisé en ce que** la première interface (116) communique (208, 212), au moins temporairement, avec l'application de simulation (104-1, ..., 104-n) dans un premier format de données, dans lequel la deuxième interface (118) communique (204, 216), au moins temporairement, avec le simulateur périphérique (102) dans un deuxième format de données différent du premier format de données.

17. Procédé selon la revendication 16, **caractérisé en ce que** l'élément fonctionnel (122) exécute (206) au moins une instruction permettant de recevoir le signal (110) spécifique au simulateur périphérique (102) dans le deuxième format de données et d'envoyer le signal (108) spécifique à la classe dans le premier format de données.

18. Procédé selon la revendication 16 ou 17, **caractérisé en ce que** l'élément fonctionnel (122) exécute (214) au moins une instruction permettant de recevoir le signal (108) spécifique à la classe dans le premier format de données et d'envoyer le signal (110) spécifique au simulateur périphérique (102) dans le deuxième format de données.

19. Procédé selon l'une quelconque des revendications 12 à 17, **caractérisé en ce que** la fonction de simulation détermine (206) un paramètre de simulation spécifique au simulateur périphérique (102), en fonction d'un paramètre de simulation spécifique à la classe, ou détermine (214) un paramètre de simulation spécifique à la classe en fonction d'un paramètre de simulation spécifique au simulateur périphérique.

20. Procédé selon l'une quelconque des revendications 13 à 19, **caractérisée en ce que** la classe caractérise un système radar et le simulateur périphérique (102) simule un radar stationnaire ou un radar rotatif, ou dans lequel la classe caractérise un système d'armes et le simulateur périphérique (102) simule un sous-système de la classe de système d'armes, ou dans lequel la classe caractérise un capteur électro-optique et le simulateur périphérique (102) simule un sous-système de la classe de capteur électro-optique, ou dans lequel la classe caractérise un capteur électromagnétique et le simulateur périphérique (102) simule un sous-système de la classe de capteur électromagnétique, ou dans lequel la classe caractérise un système de défense et le simulateur périphérique (102) simule un sous-système de la classe de système de défense.
